# EUROPÄISCHE PATENTSCHRIFT

(11) **EP 1 738 457 B1**
(45) Veröffentlichungstag und Bekanntmachung des Hinweises auf die Patenterteilung: **31.10.2007**
(21) Anmeldenummer: 04802991.2
(22) Anmeldetag: 24.12.2004
(51) Int. Cl.: H02N 6/00, G09F 15/00

(54) **ENERGIEVERSORGUNGSEINRICHTUNG FÜR EINE NETZFERNEN STANDORT MIT EINEM ODER MEHREREN VERBRAUCHERN**
POWER SUPPLY DEVICE FOR A LOCATION, WHICH IS REMOTE FROM A POWER MAINS, HAVING ONE OR MORE CONSUMERS
DISPOSITIF D'ALIMENTATION EN ENERGIE POUR SITE ELOIGNE DU RESEAU, COMPORTANT UN OU PLUSIEURS CONSOMMATEURS

(30) Priorität: 13.04.2004 DE 202004005733 U; 27.04.2004 DE 202004006681 U; 12.11.2004 DE 202004017577 U
(43) Veröffentlichungstag der Anmeldung: 03.01.2007
(73) Patentinhaber: APEX ENERGY TETEROW GMBH, 17166 Teterow (DE)
(72) Erfinder: HEHMANN, Mathias, 17166 Teterow (DE); KREFT, Gerald, 17166 Teterow (DE); NEHLS, Thomas, 17166 Teterow (DE)
(74) Vertreter: Jaap, Reinhard
(86) Internationale Anmeldenummer: PCT/DE2004/002811
(87) Internationale Veröffentlichungsnummer: WO 2005/101641

(56) Entgegenhaltungen:
- EP-A- 0 855 690
- WO-A-01/63518
- WO-A-94/14150
- DE-A1- 3 540 822
- DE-A1- 19 811 487
- DE-A1- 19 816 304
- US-B1- 6 427 369
- JOHANNES BERNREUTER: "Der Rappenecker Hof übernimmt mit einer Brennstoffzelle erneut Pionierfunktion" PHOTON, 11. Oktober 2003 (2003-10-11), XP002322606

## Beschreibung

Die Erfindung bezieht sich auf eine Energieversorgungseinrichtung für einen netzfernen Standort mit einem oder mehreren Verbrauchern, bestehend aus einer Photovoltaikanlage mit einem Sonnenkollektor, einer Steuer- und Regeleinheit und einem elektrischen Energiespeicher, wobei die Steuer- und Regeleinheit eingangsseitig mit dem Sonnenkollektor, dem Energiespeicher und wahlweise mit einem oder mehreren zusätzlichen Wind-, Wasser- und/oder Verbrennungsgeneratoren und ausgangsseitig mit dem Energiespeicher und den Verbrauchern verbunden ist und die Steuer- und Regeleinheit zusammen mit dem Energiespeicher körperlich in einem prismatischen Schaltschrank untergebracht ist.
Derartige Energieversorgungseinrichtungen werden für Kleinverbraucher im industriellen und kommunalen Bereich eingesetzt.

Die Versorgung von Stromverbrauchern mit elektrischer Energie ist immer dann kein Problem, wenn sich diese Verbraucher in der Nähe von elektrischen Stromnetzen befinden und wenn der bauliche Aufwand zum Anschluss an dieses elektrische Netz mit vertretbaren Aufwendungen möglich ist.
In vielen Fällen scheitert aber der Anschluss eines Kleinverbrauchers an ein elektrisches Netz an der räumlichen Entfernung von dem Netz oder aber auch dann, wenn dazu in kommunalen Bereichen umfangreiche Tiefbauarbeiten notwendig werden.

Es ist allgemein bekannt, solche Kleinverbraucher wie beispielsweise Umweltmess-, Daten-, Sicherheits- und Mobilfunkanlagen an Autobahnen oder im freien Gelände oder auch Beleuchtungs-, Werbe- und Verkaufseinrichtungen in den Kommunen mit einer Photovoltaikanlage zu betreiben.
Eine solche Photovoltaikanlage vertreibt die Firma Siemens AG unter dem Namen "Transportationssystem", TS RA PC ED2 PM, H. Bruer/Walter, Seite 1 bis 5, 2002.
Zu dieser Photovoltaikanlage gehört ein Solarmodul, der auf einem tragenden und im Erdreich fundamentierten Mast montiert ist. Im räumlichen Abstand zu diesem Mast ist ein Schaltschrank in das Erdreich eingelassen, der eine Steuer- und Regeleinheit zur bedarfsgerechten Versorgung eines Verbrauchers und einen Energiespeicher zur Aufnahme überschüssig erzeugter Energie und zur Abgabe gespeicherter Energie an den Verbraucher beinhaltet. Dieser Schaltschrank schließt mit der Erdoberfläche bündig ab und besitzt zu Reparatur- und Wartungszwecken einen Deckel, durch den die Steuer- und Regeleinheit als auch der Energiespeicher zugänglich werden.
Funktionell verbunden ist die Steuer- und Regeleinheit über ein Erdkabel mit dem Solarmodul und über eine interne Verkabelung mit dem Energiespeicher. Außerdem führt ein Erdkabel zu jedem räumlich entfernten Verbraucher. Durch entsprechende Anschlüsse an der Steuer- und Regeleinheit ist diese Photovoltaikanlage auch mit einem oder mehreren zusätzlichen Energiegewinnungsanlagen kombinierbar, wie es beispielsweise ein Wind- oder ein Wassergenerator ist.
Diese Photovoltaikanlage hat aber Nachteile. So ist zunächst der Installationsaufwand sehr hoch, weil sowohl der Solarmast als auch der Schaltschrank und die entsprechenden Verbraucher separat abgestellt und fundamentiert werden müssen. Dabei ist die Fundamentierung des Solarmastes sehr aufwendig, weil er einer erheblichen Windlast ausgesetzt ist. Sehr aufwendig ist auch das Versenken des Schaltschrankes in das Erdreich, weil hier viel Erdreich bewegt werden muss. Der Installationsaufwand wird auch durch die erforderliche Verkabelung im Erdreich erhöht. Das Alles führt zu unvertretbar hohen Installationskosten, die oftmals in keinem Verhältnis zu dem Nutzen eines Kleinverbrauchers stehen. Auf Grund der hohen Installationskosten ist diese Photovoltaikanlage auch nicht mobil einsetzbar. Der Installationsaufwand wird noch erhöht, wenn die Photovoltaikanlage, mit zusätzlichen durch Wind oder Wasser betriebenen Generatoren gekoppelt wird, weil dann auch zusätzliche Fundamentierungen und Verkabelungen erforderlich werden.
Sehr kompliziert gestalten sich auch die Reparatur- und Wartungsarbeiten, weil die Steuer- und Regeleinheit und der Energiespeicher sehr schwer zugänglich sind und zu den. Arbeiten aus der Tiefe des Schaltschrankes an die Erdoberfläche gehoben werden müssen. Das erfordert eine hohe körperliche Anstrengung.
Von Nachteil ist auch eine unzureichende Kühlung des Energiespeichers, weil die von den elektronischen Bauteilen der Steuer- und Regeleinheit ausgehende Strahlungswärmc nicht abgeführt werden kann und ein entsprechender Temperaturausgleich nur über das Erdreich erfolgen kann. Da die Temperatur des Erdreiches von den Tages- und Jahreszeiten abhängt und diese nicht beeinflussbar ist, ist eine geregelte Kühlung des Energiespeichers nicht möglich. Das verschlechtert das Speichervermögen des Energiespeichers.
Diese Photovoltaikanlage erfüllt auch nicht die Anforderungen an die Sicherheit, weil sowohl das oberirdische Solarmodul mit seinem relativ dünnen Solarmast als auch der unterirdische Schaltschrank und der betriebene Verbraucher für Jederman leicht zugänglich sind. Damit können die Bauteile der Photovoltaikanlage leicht beschädigt oder manipuliert werden.

In der WO 94/14150 A1 ist eine entsprechende Reklamesäule beschrieben, die eine zylindrische Form besitzt und aus mehreren Funktionsteilen zusammengesetzt ist. Die Reklamesäule wird von einer Photovoltaikanlage mit einem Solarmodul gespeist und besitzt im Inneren einen Energiespeicher und mehrere elektrische Verbraucher.

Der Erfindung liegt daher die Aufgabe zu Grunde, eine gattungsgemäße Energieversorgungseinrichtung als eine kompakte Anlage auszuführen.

Diese Aufgabe wird dadurch gelöst, dass der prismatische Schaltschrank der Steuer- und Regeleinheit sowie der Verbrennungsgenerator und mindestens ein Verbraucher in einer zylindrischen Behausung untergebracht sind.

Zweckdienliche Ausgestaltungen ergeben sich aus den Unteransprüchen 2 bis 7.

Die neue Energieversorgungseinrichtung beseitigt die genannten Nachteile des Standes der Technik. Dabei liegt der besondere Vorteil darin, dass die neue Energieversorgungseinrichtung *mit dem Solarmodul und wahlweise dem zusätzlichen Verbrennungsgenerator sowie dem Schaltschrank und dem Verbraucher* als eine kompakte Einheit ausgeführt ist *und so ein verwertbares Endprodukt darstellt. Dabei führt die Verwendung eines neuen Verbrauchers zu einem neuen verwertbaren Endprodukt.* Das eröffnet viele Vorteile hinsichtlich der Vereinfachung der Installation, sodass die neue Energieversorgungseinrichtung auch ortsveränderlich und sogar mobil genutzt werden kann.
Das ergibt sich auch aus der zylindrisch runden Außenwand des Behausungsteiles, weil die Behausung dadurch eine große Standfläche und damit eine gute Standsicherheit erhält. Die zylindrisch runde Außenwand der Behausung bietet dem Wind auch wenig Angriffsfläche, sodass sich auch dadurch eine hohe Standsicherheit einstellt. Das erspart aufwendige Fundamente. Dadurch kann die neue Energieeinrichtung zum Beispiel auf einem normalen Straßenpflaster abgestellt und befestigt werden, ohne dass ein besonderes Fundament erforderlich wird. Vorteile ergeben sich auch durch die quadratische oder rechteckige Querschnittsform des Schaltschrankes für die Steuer- und Regeleinheit und der im Querschnitt kreisförmigen Behausung, weil dadurch automatisch Freiräume entstehen, die als Lüftungsschächte ausgebildet sind und die für die wichtige Kühlung oder Klimatisierung des Behausungsinnenraumes genutzt werden können. Da die Schaltschränke üblicherweise bereits in der prismatischen Form vorhanden sind, braucht nur die Behausung in die zylindrische Form gebracht werden. Auf Grund ihrer Großvolumigkeit dienen diese Freiräume auch gleichzeitig als thermische Isolierung gegen die Einwirkung von Sonnenkraft. Das schont die im Inneren der Behausung befindlichen technischen Geräte.
Es ist zweckmäßig, wenn auch der Verbrennungsgenerator und der eingesetzte Verbraucher jeweils als eine kompakte Einheit ausgeführt sind. Das vereinfacht die Montage und die Installation und spart Aufstellungskosten.
Es ist auch zweckmäßig, wenn das Solarmodul und alle weiteren technischen Geräte vom Inneren der Behausung befestigt sind, weil damit weniger Bauteile der Witterung ausgesetzt sind und weil dadurch die Sicherheit gegen eine Beschädigung oder Diebstahl verringert wird.

Es ist weiterhin zweckmäßig, das Behausungsdach verstellbar auszuführen, weil damit das Behausungsdach nach dem Lauf der Sonne ausgerichtet werden kann. Dabei bietet sich auch an, das Behausungsdach zweiteilig mit einem feststehenden unteren Dachteil und einem oberen verstellbaren Dachteil auszuführen. Durch den Einsatz eines Antriebes kann das verstellbare Dach oder das verstellbare Dachteil dem Lauf der Sonne folgend ausgeführt werden.

Die Erfindung soll anhand eines Ausführungsbeispieles näher erläutert werden.
Dazu zeigen:
- Fig. 1:: ein vereinfachtes und schematisiertes Funktionsschaltbild,
- Fig. 2:: eine Vorderansicht des Amneldegegenstandes,
- Fig. 3:: eine seitliche Innenansicht des Anmeldegegenstandes und
- Fig. 4:: einen schematisierten Querschnitt durch den Anmeldegegenstand.

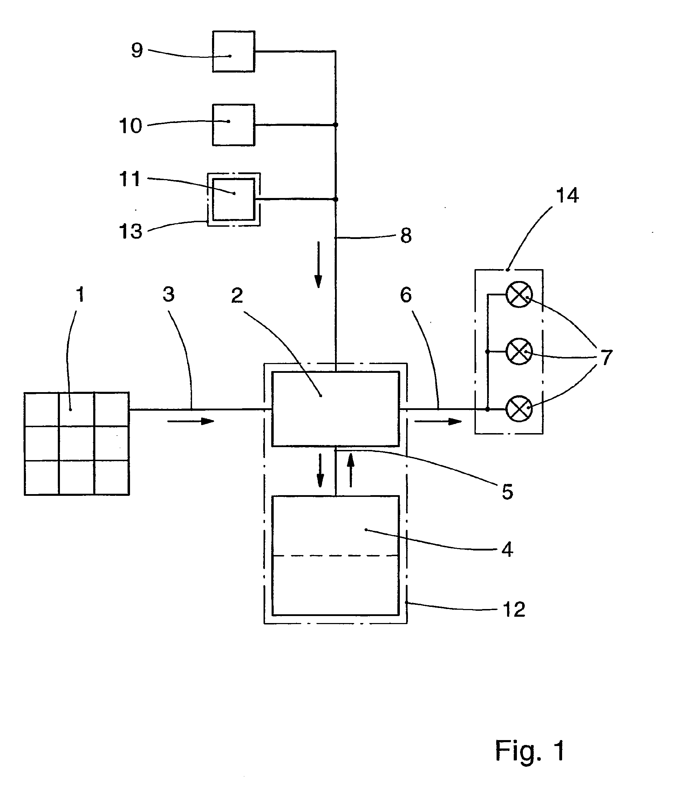

Wie die Fig. 1 zeigt, besteht die Photovoltaikanlage aus einem handelsüblichen und hochleistungsfähigen Solarmodul 1 und einer Steuer- und Regeleinheit 2, die beide über eine elektrische Leitung 3 miteinander verbunden sind. Zur Photovoltaikanlage gehört auch ein Energiespeicher 4, der über eine elektrische Leitung 5 mit der Steuer- und Regeleinheit 2 verbunden ist. Über eine elektrische Leitung 6 ist die Steuer- und Regeleinheit 2 ausgangsseitig mit einem oder mehreren Verbrauchern 7 verbunden. Dabei können die Verbraucher 7 beispielsweise Beleuchtungsanlagen, Mess- und Signalgeräte, Verkaufsautomaten oder auch Geräte zur Gewährleistung einer optimalen Funktion der Energieversorgungsanlage sein. Über eine elektrische Sammelleitung 8 sind zusätzlich ein Windgenerator 9, ein Wassergenerator 10 und/oder ein mit einem Treibstoff betriebener Verbrennungsgenerator 11 an der Steuer- und Regeleinheit 2 angeschlossen, wobei der Windgenerator 9, der Wassergenerator 10 und der Verbrennungsgenerator 11 parallel zueinander angeordnet sind. Als Verbrennungsgenerator 11 ist ein Gasgenerator vorgesehen.

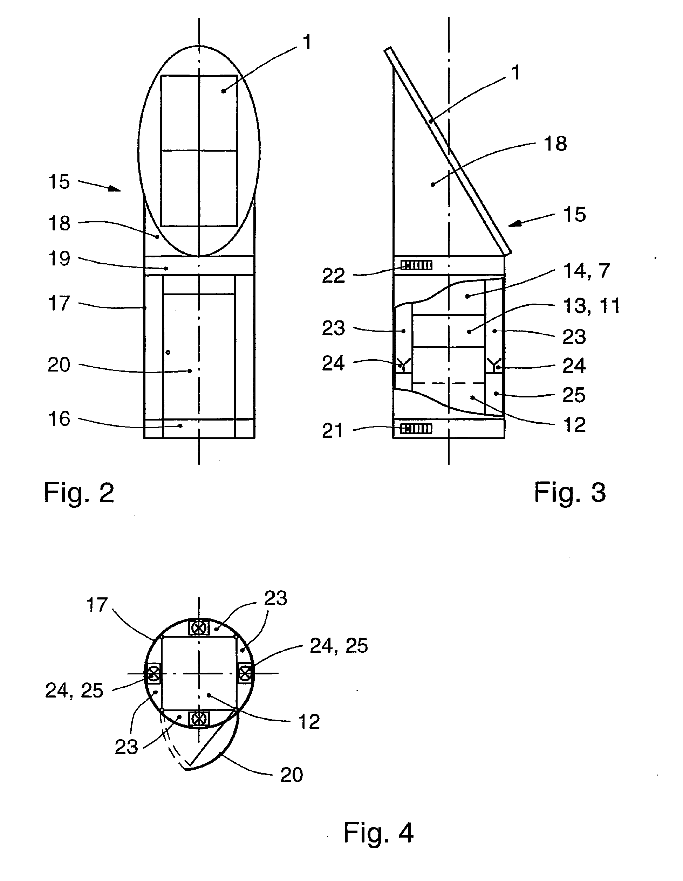

Mit diesem Aufbau wird durch das Solarmodul 1 erzeugter elektrischer Strom an die Steuer- und Regeleinheit 2 geliefert, wo der Strom bedarfsgerecht bemessen, in eine Wechselspannung gewandelt und dann über die elektrische Leitung 6 an die Verbraucher 7 geliefert wird. Von dem Solarmodul 1 überschüssig erzeugter Strom wird von der Steuer- und Regeleinheit 2 abgezweigt und über die elektrische Leitung 5 an den Energiespeicher 4 geliefert, wo er abgelegt wird. Für den Fall einer nicht bedarfsgerechten Abdeckung mit Strom allein aus dem Solarmodul 1, bemisst die Steuer- und Regeleinheit 2 den zusätzlich erforderlichen Strombedarf und schaltet den Energiespeicher 4 in die Stromversorgung mit ein. Bei einem nicht ausreichenden Ladezustand des Energiespeicher 4 aktiviert die Steuer- und Regeleinheit 2 einen oder mehrere der zur Verfügung stehenden Generatoren, sodass wieder der volle Ladezustand des Energiespeichers 4 erreicht wird.
Wie die Fig. 1 weiterhin zeigt, sind die Steuer- und Regeleinheit 2 zusammen mit dem Energiespeicher 4 in einem Schaltschrank 12 untergebracht, der in üblicher Weise prismatisch mit einem quadratischen oder rechteckigen Querschnitt ausgeführt ist. Weiterhin ist der Verbrennungsgenerator 11 als eine kompakte Versorgungseinheit 13 und zumindest ein Verbraucher 7 als eine kompakte Verbrauchereinheit 14 ausgeführt. Gemäß der Fig. 2 bis 4 ist der prismatische Schaltschrank 12 zusammen mit der kompakten Versorgungseinheit 13 und die kompakte Verbrauchereinheit 14 in einer Behausung 15 untergebracht. Diese Behausung 15 besteht aus einem Behausungssockel 16 zur Anbindung an eine Standfläche, aus einem zylindrischen Behausungsteil 17 mit einem im Querschnitt kreisförmigen Geräteraum und aus einem Behausungsdach 18. Der Behausungssockel 16 ist mit Befestigungselementen ausgestattet, die im Zusammenwirken mit einem Fundament oder mit in das Erdreich eingelassenen Verankerungen eine hohe Standsicherheit gewährleisten und gleichzeitig eine schnelle und leichte Montage ermöglichen. Das Behausungsdach 18 hat die Form eines abgeschrägten Zylinders, auf dessen abgeschrägte und elipsenförmig ausgebildete Fläche das Solarmodul 1 abgelegt und mit nur von innen zugänglichen Elementen befestigt ist. Dabei ist das Solarmodul 1 in seiner Form und seiner Größe auf die Elipsenform und die Größe der abgeschrägten Fläche des Behausungsdaches 18 abgestimmt. Die Form und die Größe des Solarmoduls 1 können aber auch von der Form und der Größe der abgeschrägten Fläche des Behausungsdaches 18 abweichen.

Das Behausungsdach 18 ist über einen verstellbaren Adapter 19 mit dem zylindrischen Behausungsteil 17 verbunden, mit dem das Behausungsdach 18 mit seinem Sonnenkollektor 1 nach dem Stand der Sonne gedreht und geschwenkt werden kann.
Das Behausungsteil 17 ist mit einer seitlichen und einbruchsicheren Eingangstür 20 ausgestattet, die ein freies Begehen des kreisrunden Geräteraumes ermöglicht. Dabei ist dieser kreisförmige Geräteraum so bemessen, dass sein freier Innendurchmesser gleich oder größer als die größte Querschnittsdiagonale des prismatischen Schaltschrankes 12 ist. Damit ergeben sich zwischen der gekrümmten Innenwand des kreisförmigen Geräteraumes und den ebenen Außenwänden des Schaltschrankes 12 vertikal ausgerichtete Freiräume, die im Zusammenwirken mit unteren Luftöffnungen 21 im Behausungsteil 17 oder im Behausungssockel 16 und oberen Luftöffnungen 22 im Behausungsteil 17, im Adapter 19 oder im Behausungsdach 18 vier Lüftungsschächte 23 ausbilden. Da die kompakte Versorgungseinheit 13 mit dem Gasgenerator und die kompakte Verbrauchereinheit 14 ebenfalls jeweils eine von der Zylinderform des inneren Geräteraumes abweichende Außenkontur haben, erstrecken sich die Luftschächte 23 natürlich auch auf diese Bereiche. Dabei sind die Lüftungsschächte 23 mit ihren unteren Luftöffnungen 21 und ihren oberen Luftöffnungen 22 so ausgelegt, dass eine Luftzirkulation eintritt, die zum Zwecke der Kühlung an den Geräten der Steuer- und Regeleinheit 2 und des Energiespeichers 4 sowie an der kompakten Versorgungseinheit 13 und der kompakten Verbrauchereinheit 14 vorbeiführt. Zusätzlich befinden sich in jedem Lüftungsschacht 23 ein oder mehrere Ventilatoren 24, die bei Bedarf die natürliche Luftzirkulation in eine Zwangszirkulation bringen. Die Ventilatoren 24 sind alternativ mit einer Klimaanlage 25 gekoppelt, um im Geräteraum der Behausung 15 eine ausgewählte und konstante Temperatur zu erzielen. Elektrisch versorgt werden die Ventilatoren 24 und die Klimaanlage 25 durch die eigene Energieversorgungseinrichtung.

### Liste der Bezugszeichen

- 1: Solarmodul
- 2: Steuer- und Regeleinheit
- 3: elektrische Leitung
- 4: Energiespeicher
- 5: elektrische Leitung
- 6: elektrische Leitung
- 7: Verbraucher
- 8: elektrische Sammelleitung
- 9: Windgenerator
- 10: Wassergenerator
- 11: Verbrennungsgenerator
- 12: Schaltschrank
- 13: kompakte Versorgungseinheit
- 14: kompakte Verbrauchereinheit
- 15: Behausung
- 16: Behausungssockel
- 17: Behausungsteil
- 18: Behausungsdach
- 19: verstellbarer Adapter
- 20: Eingangstür
- 21: untere Luftöffnung
- 22: obere Luftöffnung
- 23: Lüftungsschacht
- 24: Ventilator
- 25: Klimaanlage

## Patentansprüche

1. Energieversorgungseinrichtung für einen netzfernen Standort mit einem oder mehreren angeschlossenen Verbrauchern (7), bestehend aus einer Photovoltaikanlage mit einem Solarmodul (1), einer Steuer- und Regeleinheit (2) und einem elektrischen Energiespeicher (4), wobei der elektrische Energiespeicher (4), die Steuer- und Regeleinheit (2) und die Verbraucher (7) in einer zylindrischen Behausung (15) untergebracht sind,
**dadurch gekennzeichnet, dass**
a) die Steuer- und Regeleinheit (2) eingangsseitig mit dem Solarmodul (1), dem Energiespeicher (4) und wahlweise mit einem oder mehreren anders gearteten Generatoren und ausgangsseitig mit dem Energiespeicher (4) und den Verbrauchern (7) verbunden ist,
b) die Steuer- und Regeleinheit (2) zusammen mit dem Energiespeicher (4) körperlich in einem prismatischen Schaltschrank (12) untergebracht ist und
c) der anders geartete Generator zusammen mit dem prismatischen Schaltschrank (12) sowie mit mindestens einem Verbraucher (7) in der zylindrischen Behausung (15) untergebracht ist, wobei
d) sich durch die Außenwand des prismatischen Schaltschranks (12) des anders gearteten Generators und des mindestens einen Verbrauchers (7) einerseits und der zylindrischen Innenwand des Behausungsteiles (17) andererseits vertikale und mit der Atmosphäre verbundene Lüftungsschächte (23) ausbilden.

2. Energieversorgungseinrichtung nach Anspruch 1,
**dadurch gekennzeichnet, dass** als anders gearteter Generator ein Verbrennungsmotor (11) mit einem elektrischen Generator eingesetzt wird, wobei der Verbrennungsmotor (11) als eine kompakte Versorgungseinheit (13) und der mindestens eine Verbraucher (7) als eine kompakte Verbrauchereinheit (14) ausgeführt sind.

3. Energieversorgungseinrichtung nach Anspruch 1,
**dadurch gekennzeichnet, dass** zur zwangsweisen Luftzirkulation in den Lüftungsschächten (23) Ventilatoren (24) eingesetzt sind.

4. Energieversorgungseinrichtung nach Anspruch 3,
**dadurch gekennzeichnet, dass** zur Erzielung einer temperaturbeständigen Luftzirkulation die Ventilatoren (24) mit einer Klimaanlage (25) gekoppelt sind.

5. Energieversorgungseinnchtung nach Anspruch 1,
**dadurch gekennzeichnet, dass** die zylindrische Behausung (15) durch ein Behausungsdach (18) abgedeckt ist, das die Form eines abgeschrägten Zylinders aufweist und so eine abgeschrägte und elipsenförmig Montagefläche ausbildet, wobei auf dieser abgeschrägten Montagefläche das Solarmodul (1) abgelegt und mit nur von innen zugänglichen Elementen befestigt ist.

6. Energieversorgungseinrichtung nach Anspruch 5,
**dadurch gekennzeichnet, dass** die Form und die Größe des Solarmoduls (1) an die Form und die Größe der Montagefläche des Behausungsdaches (18) angepasst ist.

7. Energieversorgungseirichtung nach Anspruch 5,
**dadurch gekennzeichnet, dass** das Behausungsdach (18) oder ein Teil des Behausungsdaches (18) über einen verstellbaren Adapter (19) am Behausungsteil (18) befestigt ist und gegenüber dem Behausungsteil (18) drehbar und schwenkbar ausgeführt ist.

## Claims

1. Power supply device for a location which is remote from a power mains, with one or more connected loads (7), consisting of a photovoltaic system with a solar module (1), an open-loop and closed-loop control unit (2) and an electrical energy store (4), the electrical energy store (4), the open-loop and closed-loop control unit (2) and the loads (7) being housed in a cylindrical housing (15),
**characterized in that**
a) the open-loop and closed-loop control unit (2) is connected on the input side to the solar module (1), the energy store (4) and optionally one or more generators of a different type, and on the output side to the energy store (4) and the loads (7),
b) the open-loop and closed-loop control unit (2), together with the energy store (4), is physically housed in a prismatic switchgear cabinet (12), and
c) the generator of a different type, together with the prismatic switchgear cabinet (12) and at least one load (7), is housed in the cylindrical housing (15),
d) vertical ventilation shafts (23) which are connected to the atmosphere being formed by the outer wall of the prismatic switchgear cabinet (12) of the generator of a different type and of the at least one load (7) on the one hand, and the cylindrical inner wall of part (17) of the housing on the other hand.

2. Power supply device according to Claim 1,
**characterized in that** as the generator of a different type, an internal combustion engine (11) with an electrical generator is used, the internal combustion engine (11) being implemented as a compact supply unit (13) and the at least one load (7) being implemented as a compact load unit (14).

3. Power supply device according to Claim 1,
**characterized in that** fans (24) are used for forced air circulation in the ventilation shafts (23).

4. Power supply device according to Claim 3,
**characterized in that** to achieve thermally stable air circulation, the fans (24) are connected to an air-conditioning system (25).

5. Power supply device according to Claim 1,
**characterized in that** the cylindrical housing (15) is covered by a housing roof (18), which has the form of a sloping cylinder and thus forms a sloping ellipsoidal mounting surface, the solar module (1) being placed on this sloping mounting surface and fixed by elements which are only accessible from inside.

6. Power supply device according to Claim 5,
**characterized in that** the shape and size of the solar module (1) are adapted to the shape and size of the mounting surface of the housing roof (18).

7. Power supply device according to Claim 5,
**characterized in that** the housing roof (18) or part of the housing roof (18) is fixed on the housing part (18) via an adjustable adapter (19), and is implemented so that it can be rotated and swivelled relative to the housing part (18).

## Revendications

1. Installation d'alimentation en énergie pour un site éloigné du réseau électrique et ayant un ou plusieurs consommateurs (7), branchés, comprenant une installation photovoltaïque avec un module solaire (1), une unité de commande et de régulation (2) et un accumulateur d'énergie électrique (4), cet accumulateur (4), l'unité de commande et de régulation (2) et les utilisateurs (7) étant logés dans un boîtier cylindrique (15),
**caractérisé en ce que**
a) l'unité de commande et de régulation (2) est reliée en entrée au module solaire (1), à l'accumulateur d'énergie (4) et au choix, à un ou plusieurs autres générateurs et en sortie, elle est reliée à l'accumulateur d'énergie (4) et aux utilisateurs (7),
b) l'unité de commande de régulation (2) avec l'accumulateur d'énergie (4) sont logés physiquement dans une armoire de commutation (12), prismatique, et
c) le générateur d'un autre type avec l'armoire de commutation prismatique (12) ainsi qu'au moins un consommateur (7) sont logés dans le boîtier cylindrique (15) et
d) d'une part, la paroi extérieure de l'armoire de commutation (12) prismatique du générateur d'un autre type et au moins un consommateur (7), et d'autre part, la paroi intérieure cylindrique de la partie de boîtier (17), forment des surfaces de ventilation (23) verticales, reliées à l'atmosphère.

2. Installation d'alimentation en énergie selon la revendication 1,
**caractérisée en ce que**
le générateur d'un autre type est un moteur à combustion interne (11) avec un générateur électrique et le moteur à combustion interne (11) est réalisé comme unité d'alimentation (13) compacte et au moins un utilisateur (7) est réalisé comme unité d'utilisateur (14), compacte.

3. Installation d'alimentation en énergie selon la revendication 1,
**caractérisée en ce que**
pour la circulation forcée de l'air, des ventilateurs (24) équipent les puits de ventilation (23).

4. Installation d'alimentation en énergie selon la revendication 3,
**caractérisée en ce que**
les ventilateurs (24) sont couplés à une installation de climatisation (25) pour réaliser une circulation d'air en fonction de la température.

5. Installation d'alimentation en énergie selon la revendication 1,
**caractérisée en ce que**
le boîtier cylindrique (15) est couvert par un toit (18) qui a la forme d'un cylindre coupé et il développe une surface de montage inclinée, de forme elliptique, et cette surface de montage inclinée reçoit le module solaire (1) et elle est fixée par des éléments accessibles seulement de l'intérieur.

6. Installation d'alimentation en énergie selon la revendication 5,
**caractérisée en ce que**
la forme et la taille du module solaire (1) sont adaptées à la forme et à la taille de la surface de montage du toit de logement (18).

7. Installation d'alimentation en énergie selon la revendication 5,
**caractérisée en ce que**
le toit de logement (18) ou une partie du toit de logement (18) sont fixés à la partie de logement (18) par un adaptateur (19) réglable et tournant ou pivotant par rapport à la partie de boîtier (18).
